# EUROPEAN PATENT APPLICATION

(11) **EP 1 708 454 A1**
(43) Date of publication of application: **04.10.2006**
(21) Application number: 06006424.3
(22) Date of filing: 28.03.2006
(51) Int. Cl.: H04L 29/06, H04M 3/56

(54) **Service system, information control apparatus and information control method**

(30) Priority: 30.03.2005 JP 2005098177
(71) Applicant: NEC Corporation, Minato-ku Tokyo (JP)
(72) Inventor: Takahashi, Kazuhiro, Tokyo (JP); Ono, Yoshihiro, Tokyo (JP); Shiraki, Takashi, Tokyo (JP); Kashiwagi, Takehiko, Tokyo (JP)
(74) Representative: Glawe, Delfs, Moll

(57) **Abstract**

A communication control that holds setting information applied when a communication among a first user terminal, a second user terminal, and a plurality of server apparatuses each supplying service data corresponding to a predetermined service to the first user terminal is established while associating the setting information with the service is provided. The communication control apparatus generates invitation information, based on the setting information, for establishing a communication between the second user terminal and each of the plurality of server apparatuses when receiving an invitation instruction for indicating the control unit to supply the service data on the service to the second user terminal from the first user terminal and supplies the invitation information to the plurality of server apparatuses and the second user, respectively.

## Description

### BACKGROUND OF THE INVENTION

### 1. Field of the Invention

The present invention relates to a technique for allowing a server apparatus on a communication network to provide a service to a user terminal. More specifically, the present invention relates to a technique for allowing a plurality of server apparatuses to cooperate in providing a service to a plurality of user terminals.

### 2. Description of the Related Art

There is conventionally present a service for allowing a plurality of users that constitute a group to transmit and receive information at real time using their own terminals connected to a communication network such as the Internet. As the service of this type, there is known an electronic conferencing service referred to as so-called "web conference". A conventional technique related to this electronic conference is disclosed in Japanese Patent Application Laid-Open (JP-A) No. 2002-157206.

According to the technique disclosed in JP-A 2002-157206, an electronic conference is held by a chat provided by a message server among the plural servers. During the conference, a chat administrator sends chat invitations to the other users. Each of the users who receive them transmits an indication of a chat room entry to a database and also transmits a reply indicating an acceptance of the invitation to the chat administrator, whereby each user can newly join the chat.

According to the technique disclosed in JP-A 2002-157206, the chat held by the specific server is employed as service communication means. Nowadays, in addition to the service for transmitting and receiving character data such as the chat, various other services, e.g., a voice distribution service for transmitting and receiving speakers' voices and an image distribution service for transmitting and receiving still images and moving images of participants' faces and reference materials, using a plurality of communication means in cooperation with one another have spread. In such a service using a plurality of communication means, a plurality of servers responsible for the respective communication means are used.

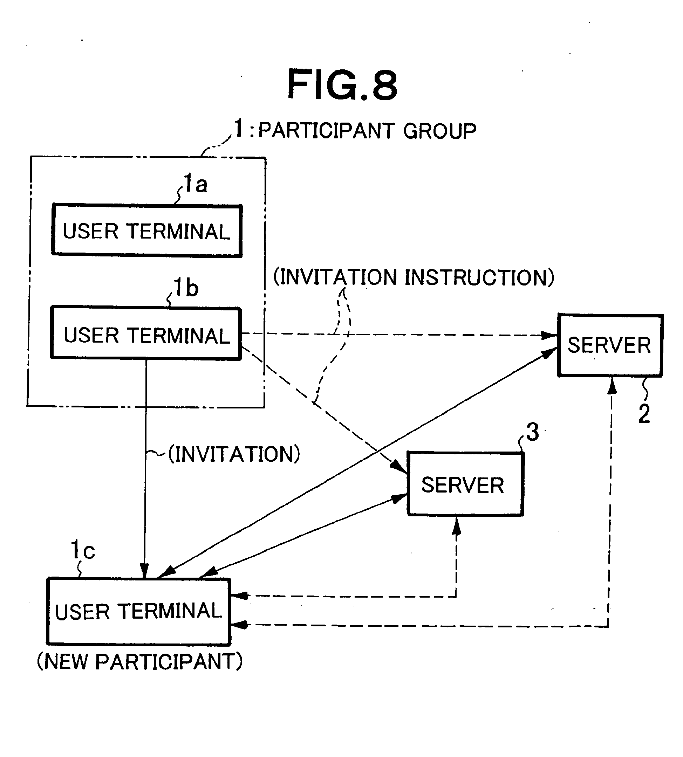

If a new participant is invited in the service provided using the plural servers, it is necessary to make a communication setting between a user terminal of the new participant and the servers before the new participant uses the service. Fig. 8 shows an example of procedures for this setting. In the example of Fig. 8, procedures for the communication setting if a user terminal 1c is newly invited to a participant group 1 consisting of user terminals 1a and 1b that are using the service are shown. Two types of setting procedures indicated by a solid line and a dotted line, respectively will now be described.

In Fig. 8, the procedures indicated by a solid-line arrow are those in which the user terminal 1b in the participant group 1 notifies the new participant user terminal 1c of addresses of servers 2 and 3 to be accessed, information on a setting of parameters to be prepared by the terminal 1c when the terminal 1c uses those servers 2 and 3, and information on a setting of parameters to be required of the respective servers 2 and 3 (transmits an "invitation" to the user terminal 1c), and for establishing communications between the new user terminal 1c and the servers 2 and 3 based on the notified information.

The other procedures indicated by a dotted-line arrow shown in Fig. 8 are those in which the user terminal 1b in the participant group 1 notifies the servers 2 and 3 of an address of the new user terminal 1c, information on parameters to be set by the respective servers 2 and 3 in relation to this user terminal 1c, and information on a setting of parameters to be required of the user terminal 1c (transmits "invitation instructions" to the respective servers 2 and 3), and for allowing the servers 2 and 3 to establish communications with the user terminal 1c in response to the notification.

However, the conventional technique has the following disadvantages. With the conventional procedures explained with reference to Fig. 8, the user terminal 1c that accepts the invitation or the user terminal 1b that transmits the invitation to the user terminal 1c needs to transmit and receive communication setting information to and from a plurality of servers when the new participant is invited. Thus, it takes complicated processings for the communication settings in advance for the invited user to participate in the service. This makes it difficult for the new user to promptly participate in the service. In addition, if a mobile apparatus that holds wireless communication is employed as the user terminal, it is desired to minimize communication time with each server and an amount of information transmitted and received to and from the servers so as to suppress consumption of terminal resources and waste of a wireless communication band.

### SUMMARY OF THE INVENTION

The present invention has been achieved to solve the conventional disadvantages. It is an object of the present invention to provide a technique for allowing a new user terminal to smoothly participate in a service provided to a plurality of user terminals by a plurality of server apparatuses in cooperation with one another.

A service system according to the present invention includes: a first user terminal and a second user terminal; a plurality of server apparatuses each supplying service data corresponding to a predetermined service to the first user terminal; and a communication control apparatus that holds setting information applied when a communication between each of the plurality of server apparatuses and the first user terminal is established while associating the setting information with the service. The communication control apparatus generates invitation information, based on the setting information, for establishing a communication between the second user terminal and each of the plurality of server apparatuses when receiving an invitation instruction for indicating the communication control apparatus to supply the service data on the service to the second user terminal from the first user terminal and supplies the invitation information to the plurality of server apparatuses and the second user.

### BRIEF DESCRIPTION OF THE DRAWINGS

Fig. 1 is a block diagram of a configuration of a system according to an embodiment of the present invention;
Fig. 2 is an explanatory view of a database according to the embodiment;
Fig. 3 is a sequence chart of operation procedures according to the embodiment;
Fig. 4 is an explanatory view of an invitation instruction according to the embodiment;
Fig. 5 is an explanatory view of an invitation notification according to the embodiment;
Fig. 6 is an explanatory view of a content of a notification from a portal node to a PTT server according to the embodiment;
Fig. 7 is an explanatory view of a content of a notification from a portal node to an image distribution server; and
Fig. 8 is an explanatory vie of a conventional system.

### DESCRIPTION OF THE PREFERRED EMBODIMENT

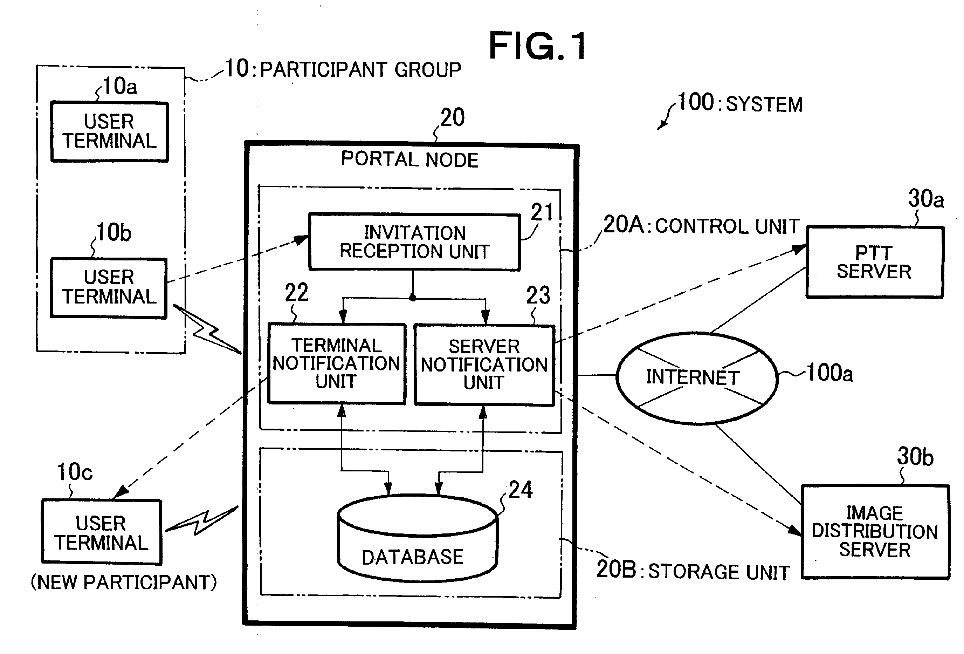

An embodiment of the present invention will be described hereinafter in detail with reference to the drawings. Fig. 1 is a block diagram of a configuration of a system 100 according to an embodiment of the present invention. The system 100 includes user terminals 10a and 10b that constitute a participant group 10 that is using a service; and a user terminal 10c to be invited to the participant group 10. In this embodiment, the service used by the participant group 10 is assumed as an electronic conferencing service.

The user terminal 10c invited to an electronic conference corresponds to a second user terminal according to the present invention. Further, one of the user terminals 10a and 10b belonging to the participant group 10 can be regarded as a first user terminal according to the present invention. The user terminals 10a, 10b, and 10c according to this embodiment are portable information terminals each including a general-purpose voice communication function and a general-purpose image processing function, and wirelessly communicate with a portal node 20, to be described later.

As shown in Fig. 1, the system 100 includes a push-to-talk (PTT) (half duplex voice communication) server 30a for a voice communication and an image distribution server 30b that distributes a still image and a moving image, both of which servers serve as server apparatuses that supply electronic conferencing service data to the respective user terminals 10a, 10b, and 10c in the participant group 10. While the number of servers is two for convenience of description in this embodiment, the system 100 may include three or more servers. In addition, the functions of each server are only exemplarily shown and each server may include functions other than those described above.

The system 100 further includes the portal node 20 corresponding to a communication control apparatus according to the present invention. The portal node 20 includes a wireless communication function for communications with the respective user terminals 10a, 10b, and 10c, and is wired-connected to the PTT server 30a and the image distribution server 30b through the Internet 100a.

As shown in Fig. 1, the portal node 20 includes a control unit 20A including an invitation reception unit 21, a terminal notification unit 22, and a server notification unit 23, and a storage unit 20B including a database 24. The invitation reception unit 21 functions to receive an invitation instruction from any one of the user terminals in the participant group 10. This invitation instruction is information for instructing the respective servers 30a and 30b to supply service data such as voices and images of the electronic conference to the to-be-invited user terminal 10c.

When the invitation reception unit 21 receives the invitation instruction, the terminal notification unit 22 and the server notification unit 23 function to generate invitation information by using the database 24, to be described later, for establishing a communication between the user terminal 10c and the PTT server 30a and a communication between the user terminal 10c and the image distribution server 30b, and to transmit the generated information to the user terminal 10c and the servers 30a and 30b, respectively. The invitation information generated by the terminal notification unit 22 is information necessary to make a communication setting in the user terminal 10c. The terminal notification unit 22 transmits the generated invitation information to the user terminal 10c. The invitation information generated by the server notification unit 23 is information for the respective servers 30a and 30b. The server notification unit 23 transmits the generated invitation information to the servers 30a and 30b.

The database 24 stores communication setting information exchanged between the user terminals 10a and 10b and the servers 30a and 30b at the time of starting the electronic conferencing service in the participant group 10 while associating the communication setting information with service identification information.

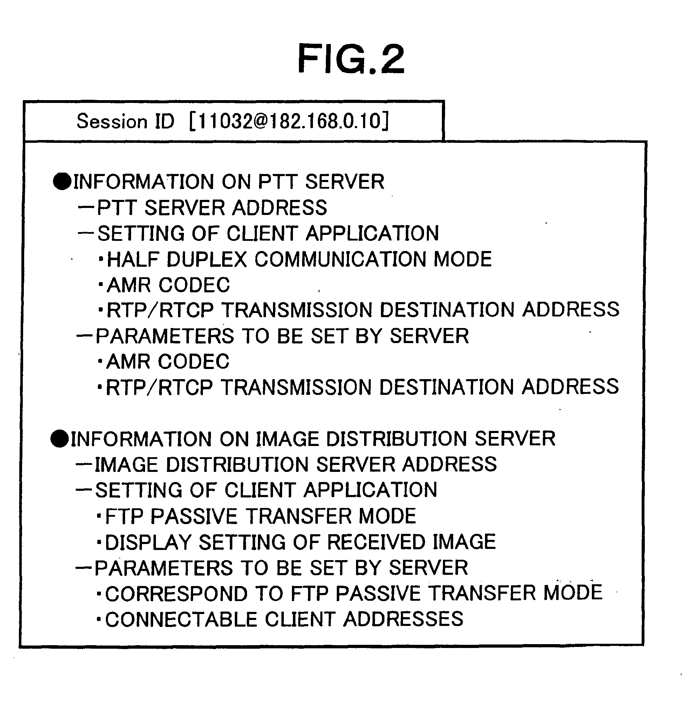

Fig. 2 shows an example of information held in the database 24. In the example of Fig. 2, the server 24 stores the communication setting information on the electronic conferencing service, which information is associated with a "Session ID", which is the service identification information, of "[11032@182.168.0.10]". The database 24 stores, as information associated with the PTT server 30a and that associated with the image distribution server 30b, server addresses, settings of application programs to be made by the user terminals in relation to the servers, and communication parameters to be set by the servers, respectively. The database 24 stores the communication setting information applied at the time of starting the service per "Session ID" as shown in Fig. 2, and provides these pieces of information in response to requests from the terminal notification unit 22 and the server notification unit 23.

As a control protocol to be used for the communications between the user terminals and the servers in the system 100, a conventionally known SIP (Session Initiation Protocol)/SDP (Service Discovery Protocol) can be used, for example. As a communication protocol applied to each application used in the electronic conference, a conventionally known protocol such as an RTP (Real-time Transport Protocol)/RTCP (RTP Control Protocol), an FTP (File Transfer Protocol) or an HTTP (Hyper-Text Transfer Protocol) can be arbitrarily used.

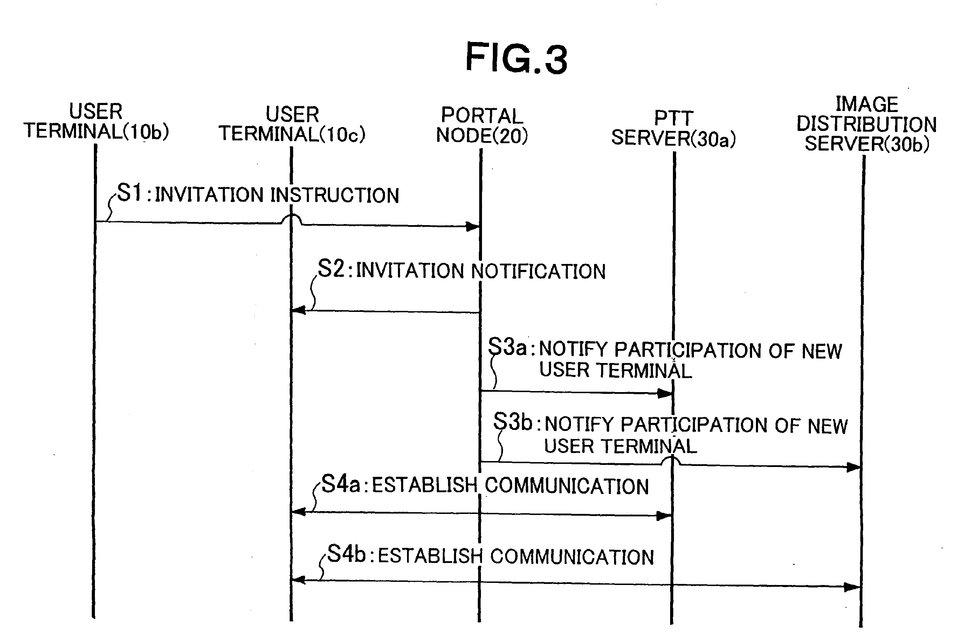

Operation procedures according to this embodiment will be described with reference to the sequence chart of Fig. 3. In this embodiment, an instance in which the user terminal 10b in the participant group 10 invites the user terminal 10c to the electronic conference will be described.

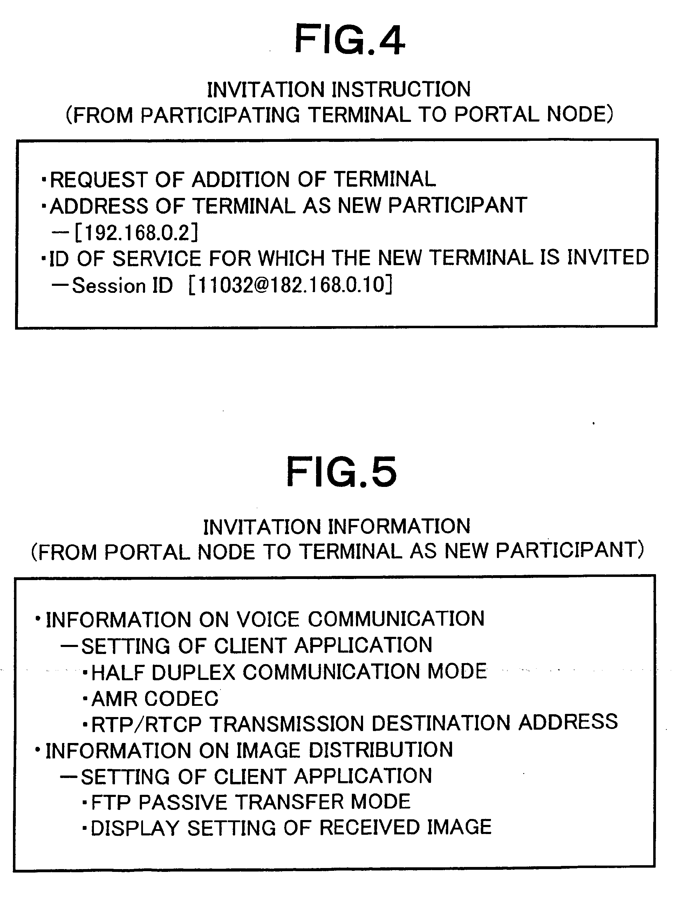

The user terminal 10b transmits an invitation instruction to the portal node 20 for notifying the portal node 20 that the user terminal 10c is invited to the participant group 10 (in a step S1). Fig. 4 shows an example of a configuration of the invitation instruction. As shown in Fig. 4, information for indicating the portal node 20 to additionally provide the service to the user terminal 10c, an address of the user terminal 10c, and the "Session ID" as the service identification information for which the user terminal 10c is invited to the service are set to the invitation instruction.

When the invitation reception unit 21 receives the invitation instruction from the user terminal 10b, the portal node 20 activates the terminal notification unit 22 and the server notification unit 23 and generates the invitation information. In generating the invitation information, the invitation notification unit 22 extracts setting information corresponding to the "Session ID" designated in the invitation instruction from the setting information held in the database 24. Since the "Session ID" designated in the invitation instruction is "[11032@182.168.0.10]" as shown in Fig. 4, the invitation notification unit 22 extracts the setting information shown in Fig. 2 from the database 24.

Next, the terminal notification unit 22 selects necessary information to receive the service data from the PTT server 30a and the image distribution server 30b from among the extracted setting information. Specifically, the terminal notification unit 22 selects the information of "client application settings" on the respective servers 30a and 30b shown in Fig. 2. The terminal notification unit 22 generates invitation information shown in Fig. 5 from the selected information.

An "RTP transmission destination address" shown in Fig. 5 is a destination address for the service data transmitted from the PTT server 30a. As the RTP transmission destination address, a different address is set depending on whether or not the portal node 20 interposes between the terminal 10c and the server 30a in the communication of the electronic conference. Namely, if the service is provided for that the communication is held through the portal node 20 even after the communication setting, an address of the portal node 20 is set as the RTP transmission destination address. If it is provided for that the user terminal 10c directly communicate with the server 30a after the communication setting, an address of the user terminal 10c is set as the RTP transmission destination address.

The terminal notification unit 22 transmits the invitation information shown in Fig. 5 and generated through the above-state procedures to the address of the user terminal 10c designated by the invitation instruction from the user terminal 10b so as to notify the user terminal 10 of an invitation (in a step S2). At this time, if the SIP is used as the communication protocol, the terminal notification unit 22 sets an "INVITE" command to a packet header. By doing so, the terminal notification unit 22 can instruct the user terminal 10c that receives the invitation information shown in Fig. 5 to activate an application by designated parameters and to communicate with the servers 30a and 30b.

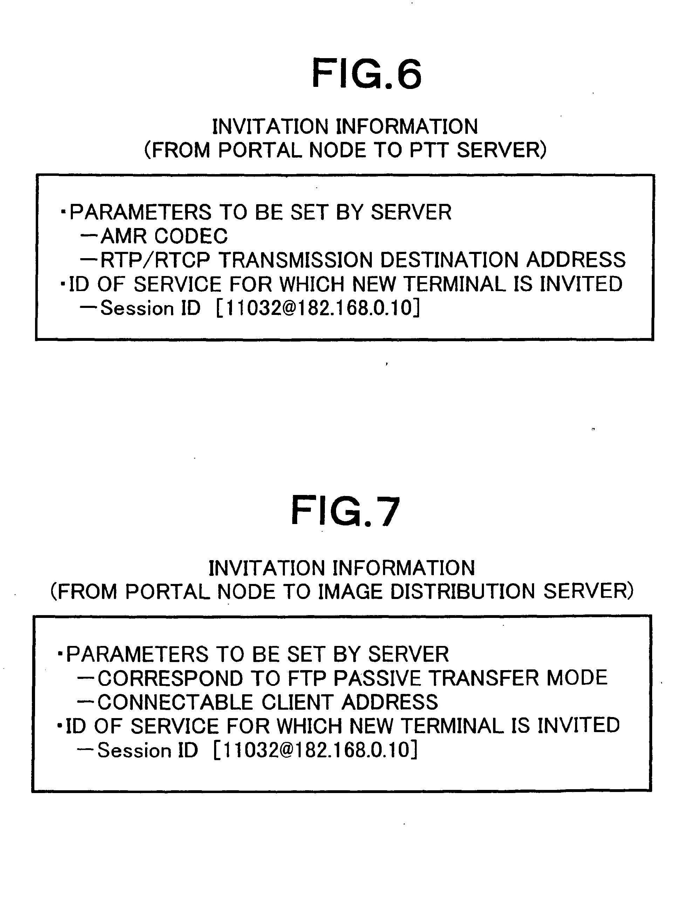

Meanwhile, the server notification unit 23 generates invitation information for the respective servers 30a and 30b using the setting information extracted from the database 24 through similar procedures as those of the terminal notification unit 22. Specifically, the server notification unit 23 generates the invitation information as shown in Fig. 6 for the PTT server 30a using the information of "server-side setting parameters" on the respective servers 30a and 30b and the "Session ID" of the service shown in Fig. 2. In addition, the server notification unit 23 generates the invitation information for the image distribution server 30b as shown in Fig. 7. It is noted as addresses in the invitation information shown in Figs. 6 and 7 are set similarly to the address in the invitation information shown in Fig. 5.

The server notification unit 23 transmits the invitation information shown in Fig. 6 and the invitation information shown in Fig. 7 to the PTT server 30a and the image distribution server 30b, while referring to the addresses of the servers 30a and 30b shown in Fig. 2 so as to notify the PTT server 30a and the image distribution server 30b of participation of the user terminal 10c in the participant group 10 (in steps S3a and S3B), respectively.

Thereafter, communications are established between the user terminal 10c that receives the invitation information from the portal node 20 and the server 30a and between the user terminal 10c and the server 30b (in steps S4a and S4b), respectively. As a result, the user terminal 10c can participate in the electronic conference together with the user terminals 10a and 10b as the participant group 10.

According to this embodiment described so far, if the invitation instruction is transmitted from the user terminal 10b in the participant group 10 to the portal node 20 at the time of inviting the user terminal 10c to the participant group 10, the portal node 20 can transmit the invitation information to the user terminal 10c and the servers 30a and 30b, respectively. It is, therefore, unnecessary for the user terminal 10c to notify the respective servers 30a and 30b of the communication setting information. Accordingly, the invited user can promptly participate in the electronic conference.

Furthermore, the communication settings for the new user are made using the setting information shown in Fig. 2 on the communication settings at the time of starting the service. Therefore, as the information on the invitation instruction transmitted to the portal node 20, it suffices to use the simple information including at least the service identification information as shown in Fig. 4. It is, therefore, possible to suppress consumption of user terminal resources. This is particularly advantageous for the system according to this embodiment configured to hold communications between the user terminals and the portal node 20 over wireless communication.

In this embodiment, the instance in which the user terminals 10a, 10b, and 10c are connected to the portal node 20 by the wireless communication has been described. Alternatively, the user terminals 10a, 10b, and 10c may be connected to the portal node 20 by a wired connection in place of the wireless connection.

In this embodiment, the instance of applying the present invention to the electronic conferencing service has been described. However, an application range of the present invention is not limited to this instance. For instance, the present invention can be applied to various purposes for allowing a plurality of users to use services provided by a plurality of servers in cooperation with one another. Examples of the services include an emergency contact from a security guard center to guards (transmission and reception of images, voices and the like of a job site among terminals of the respective guards), a report of a progress state of a work (a report of the state from a terminal of each person in charge to a terminal of his or her superior in the form of a document and a voice), a report of a delivery state of a home parcel delivery service courier (a notification of a voice of a service person and a map of the place where the service person is at present to a client terminal), management of allocation of cars in a taxi company (transmission of a reservation list to a terminal of each car and transmission of a reply to the list from each driver to a center by a voice), and a guide in a theme park (a client's conversation with headquarters while a client confirms a congestion situation of each attraction by a client's terminal), and the like.

According to the present invention, the communication control apparatus transmits the invitation information necessary to establish the communication to the second user terminal and the server apparatuses in response to the invitation instruction from the first user terminal. The processing for establishing the communication therebetween can be, therefore, simplified. This enables the second user terminal to promptly participate in the service provided by the service apparatuses.

Although the exemplary embodiments of the present invention have been described in detail, it should be understood that various changes, substitutions and alternatives can be made therein without departing from the sprit and scope of the invention as defined by the appended claims. Further, it is the inventor's intent to retrain all equivalents of the claimed invention even if the claims are amended during prosecution.

## Claims

1. A service system comprising:
a first user terminal and a second user terminal;
a plurality of server apparatuses each supplying service data corresponding to a predetermined service to the first user terminal;
and a communication control apparatus that holds setting information applied when a communication between each of the plurality of server apparatuses and the first user terminal is established while associating the setting information with the service, wherein
the communication control apparatus generates invitation information, based on the setting information, for establishing a communication between the second user terminal and each of the plurality of server apparatuses when receiving an invitation instruction for indicating the communication control apparatus to supply the service data on the service to the second user terminal from the first user terminal and supplies the invitation information to the plurality of server apparatuses and the second user.

2. The service system according to claim 1, wherein
the communication control apparatus acquires identification information on the service when receiving the invitation instruction, extracts setting information corresponding to the service using the acquired identification information, and generates the invitation information from the extracted setting information.

3. The service system according to claim 1, wherein
the communication control apparatus wirelessly communicates with the first user terminal and the second user terminal.

4. A communication control apparatus comprising:
a storage unit that holds setting information applied when a communication among a first user terminal, a second user terminal, and a plurality of server apparatuses each supplying service data corresponding to a predetermined service to the first user terminal is established while associating the setting information with the service; and
a control unit that generates invitation information, based on the setting information, for establishing a communication between the second user terminal and each of the plurality of server apparatuses when receiving an invitation instruction for indicating the control unit to supply the service data on the service to the second user terminal from the first user terminal and supplies the invitation information to the plurality of server apparatuses and the second user.

5. The communication control apparatus according to claim 4, wherein
the control unit acquires identification information on the service when receiving the invitation instruction, extracts setting information corresponding to the service using the acquired identification information, and generates the invitation information from the extracted setting information.

6. The communication control apparatus according to claim 4, wherein
the communication control apparatus wirelessly communicates with the first user terminal and the second user terminal.

7. A communication control method wherein
the communication control apparatus that holds setting information applied when a communication among a first user terminal, a second user terminal, and a plurality of server apparatuses each supplying service data corresponding to a predetermined service to the first user terminal is established while associating the setting information with the service, to generate invitation information, based on the setting information, for establishing a communication between the second user terminal and each of the plurality of server apparatuses when receiving an invitation instruction for indicating the control unit to supply the service data on the service to the second user terminal from the first user terminal and to supply the invitation information to the plurality of server apparatuses and the second user.

8. The communication control method according to claim 7, wherein
the communication control apparatus acquires identification information on the service when receiving the invitation instruction, extracts setting information corresponding to the service using the acquired identification information, and generates the invitation information from the extracted setting information.

9. The communication control method according to claim 7, wherein
the communication control apparatus wirelessly communicates with the first user terminal and the second user terminal.
